# EUROPEAN PATENT APPLICATION

(11) **EP 1 418 517 A1**
(43) Date of publication of application: **12.05.2004**
(21) Application number: 03023129.4
(22) Date of filing: 10.10.2003
(51) Int. Cl.: G06F 17/60

(54) **Method for managing knowledge flow to create value**

(30) Priority: 11.10.2002 US 418584; 19.08.2003 US 643655
(71) Applicant: Xerox Corporation, Rochester, New York 14644 (US)
(72) Inventor: Jones, Jim Irving, Rochester, Michigan 48306 (US)
(74) Representative: Grünecker, Kinkeldey, Stockmair & Schwanhäusser Anwaltssozietät

(57) **Abstract**

A method for managing knowledge within an enterprise includes defining a business process structure within which knowledge (both recorded and unrecorded knowledge) is communicated, measuring the way in which knowledge is communicated in a business process which produces an output of value to the enterprise (knowledge flow to value), optimizing the flow of knowledge throughout the enterprise, establishing a framework to support the rapid distribution, gathering and recording of knowledge, including capturing any unrecorded knowledge and recording in documents, defining a knowledge taxonomy for the enterprise which includes a classification system for classifying the knowledge for the enterprise; and classifying the body of recorded knowledge according to the knowledge taxonomy for the enterprise.

## Description

This invention relates generally to a method for managing knowledge in an enterprise, and more particularly to a system and method for knowledge flow to value consulting.

The problem of changing all or portions of the enterprise and being certain that the entire enterprise will improve has never been solved. Recently, companies have been "reengineered" with mixed results. Many business initiatives fail at great cost to enterprises. Volumes of reasons are given to explain these failures, but one basic reason underlies them all: the facts (knowledge) to manage and change the business were not available or were ignored. An important asset of an enterprise is its knowledge. Unfortunately, knowledge is difficult to measure and manage.

Until recently, there was no lens through which to view knowledge as an aspect of an organization's assets. First, managers and consultants focused on profit, efficiency, and productivity. Over time, they then added quality management, process improvement, and information technology. But these lenses ignored the knowledge in the minds of workers and documents.

Within the last decade, there has been movement towards rectifying the situation. First came document management, which addresses the storage and recall of documents as objects. As a natural follow-on, "Content" within documents, such as sentences, paragraphs, tables, and graphics, could be managed. Content management involves managing internal objects and supports their dynamic reuse in different documents. For example, content management is used to personalize an owner's web page. There are many other aspects to both document and content management.

As an outgrowth of the interest in documents and content, a larger, more comprehensive field has arisen, the filed of knowledge management. Knowledge management is consciously engineering a worker's environment so that knowledge can be better created, captured, validated, shared and used. Knowledge management includes not only document and content management, but also all aspects of interpersonal and electronic communications. There are many knowledge-related business problems. Such problems include: knowledge walking out the door. Some knowledge resides inside people's heads. When a person (or an entire generation) leaves an organization, unless the knowledge has been captured and transferred to those remaining or is explicitly defined, the organization has lost a valuable asset. Another problem is knowledge hoarding. Knowledge can be shared, but often it is not. When the prevailing cultural theme is "Knowledge is power," knowledge does not flow and organizations are crippled. Unsubstantiated assertions. People make assertions that pose as facts. Until the assertions are tested and validated, they should not be considered knowledge. In the scientific community, this is well understood. There are clear distinctions made between claims and verifiable truths. When mere claims are taken as truth, complications set in. Another problem is shelf-life of knowledge. Some knowledge retains its value over time much better than some other knowledge. Thus there are "time-honored truths" and "yesterday's news." One of the many challenges for an organization is helping a given "packet" of knowledge live a long and productive life, working through the life cycle. Knowing when to discard a packet is just as important as how to create new knowledge. Another problem is intangibility. Some knowledge is intangible, which makes it difficult to manage directly. Therefore, the organization must manage the knowledge environment to affect its quality and flow. What is needed is a method which enables an enterprise to capture critical knowledge and connect it to those who need to know the knowledge.

Fact-based management is rare in most areas of business except in manufacturing where processes are explicitly defmed and monitored about flow-to-value: components flow through fabrication and assembly to create value in products. Document management and workflow deployed on global information networks can provide the flow-to-value statistics to manage with facts and continuously improve the entire enterprise. The ability to compete on knowledge is dependent upon an enterprise's ability to explicitly define, monitor and continuously improve knowledge flow-to-value: knowledge flows through business processes to create value in its output documents and services.

In order to manage knowledge within an enterprise, the enterprise's body of knowledge must be identified and defined. Knowledge includes cognition, skills, theories, rules, processes, techniques, instructions for action used by the enterprise to solve problems and to produce output, some of which has been recorded in documents and some of which is unrecorded form. A document may include any form of media used for recordation, whether paper, electronic, optical or using some other form of technology. Unrecorded knowledge in the form of skills and information retained in the minds of the enterprises members should be identified. Once a body of knowledge has been identified, a set of knowledge objects is selected from the body of knowledge. A knowledge object is any specific knowledge that is used in an enterprise process to produce an output of value to the enterprise. Examples of knowledge objects include information recorded in documents (such as a design document for a computer software product), core competency in individuals (such as the skills of a chief scientist), and information embedded in process and systems used by the enterprise (such as a process for routing publication approvals).

Once a set of knowledge objects is defined, a set of measurable enterprise processes which utilize the knowledge objects is defined. An enterprise process uses knowledge objects in its operation to create an output having value to the enterprise. Examples of output having value can be products, software, a document, an approval, etc. The knowledge objects are used in the measurable enterprise processes in order to measure the knowledge flow to value (the time it takes the knowledge object to flow through the process such that the output is created). The enterprise processes can then be modified using a framework, such as Six Sigma, in order to optimize the knowledge flow to value. This process can be repeated periodically, or as needed to continuously improve the knowledge flow to value.

A knowledge/document taxonomy is used to make the knowledge objects shareable and accessible. A taxonomy is defined as "orderly classifications according to their presumed relationships." Metadata (e.g., title, author, data, location, description) and keywords may be used as a corporate library card catalogue; this categorization can be derived from library science cataloging techniques plus engineering or scientific disciplines associated with the company's industry, or some other classification technique applicable to the enterprise. Precision and recall of search can be improved by explicitly defining and continuously improving the knowledge document taxonomy.

A method for managing knowledge within an enterprise, according to the invention includes defining a body of knowledge for the enterprise comprising skills, theories, rules, processes, techniques, instructions for action used by the enterprise to solve problems and to produce output, some of which has been recorded in documents and some of which is in unrecorded form; analyzing the body of knowledge to identify a plurality of knowledge objects, wherein a knowledge object comprises specific knowledge contained within the body of knowledge which is used by an enterprise process to produce an output having value to the enterprise; defining a measurable business environment comprising a plurality of measurable enterprise processes, wherein the plurality of enterprise processes use the plurality of knowledge objects to produce the outputs having value to the enterprise; measuring the flow of each knowledge object through its associated measurable enterprise process to produce the associated output to determine a baseline flow for the knowledge object; modifying the enterprise process and measuring the flow of the knowledge object through the modified enterprise process until an optimized flow for the knowledge object has been achieved; capturing any unrecorded knowledge objects and recording them in documents; defining a knowledge taxonomy for the enterprise comprising a classification system for classifying the plurality of knowledge objects for the enterprise; and classifying the body of recorded knowledge objects according to the knowledge taxonomy for the enterprise.

The method may further included periodically re-defining the body of knowledge for the enterprise to include new skills, theories, rules, processes, techniques, instructions for action used by the enterprise to solve problems and to produce output, some of which has been recorded in documents and some of which is unrecorded form and to remove those skills, theories, rules, processes, techniques, instructions for action which are no longer used by the enterprise to solve problems and to produce output; and periodically re-analyzing the body of knowledge to identify additional knowledge objects contained within the body of knowledge to be included in the plurality of knowledge objects and to remove no longer needed knowledge objects from the plurality of knowledge objects.

In accordance with one aspect of the method, defining a body of knowledge may include collecting data pertaining to skills, theories, rules, processes, techniques, instructions for action used by the enterprise to solve problems and to produce output; transforming the collected data into information comprising summaries and correlations of data; and validating the information using analytical, statistical and logical methods or by peer group review to produce knowledge.

In accordance with another aspect of the method, analyzing the body of knowledge to identify a plurality of knowledge objects may include identifying a plurality of enterprise processes, wherein an enterprise process uses knowledge to produce an output having value to the enterprise; and analyzing the body of knowledge to identify which knowledge are used by the enterprise process to produce an output having value to the enterprise.

The method may further include capturing any unrecorded knowledge and recording them in documents; and classifying the body of recorded knowledge according to the knowledge taxonomy for the enterprise. In accordance with another aspect of the method, modifying the enterprise process and measuring the flow of the knowledge object through the modified enterprise may involve using a Six Sigma framework.
FIG. 1 is a block diagram showing the relationship between noise, data, information, knowledge and documents;
FIG. 2 is a block diagram which illustrates the interaction between knowledge; process, people, systems and change in an enterprise;
FIG. 3 illustrates a Six Sigma framework;
FIG. 4 illustrates the life cycle of a document in a document management system;
FIG. 5 illustrates an exemplary metrics and business case;
FIG. 6 illustrates a cause and effect diagram for analyzing knowledge bottlenecks;
FIG. 7 illustrates an operate phase in a knowledge management system; and
FIG. 8 illustrates metrics for knowledge work.

The method of managing knowledge in an enterprise may be implemented in a variety of ways, including a software implementation. The method of managing knowledge may also be used by a consultant as a tool to provide services to an enterprise. Consulting is, by its very nature, a knowledge-intensive activity. Clients engage consultants for knowledge, expertise and insights. The ability to compete on knowledge is dependent upon an organization's ability to explicitly define, monitor and continuously improve knowledge flow-to-value. An objective of a globally deployed content/document management and workflow system is be to measure knowledge flow-to-value of the entire enterprise. Once the facts to manage are available, significant global process improvement is possible. When consultants apply their knowledge to business problems, they recommend that the clients make changes. Very often, these changes relate to the knowledge environment.

The method of managing knowledge in an enterprise can be used by a consultant to assist an enterprise to identify, modify and maximize the enterprise's use of its body of knowledge, and in particular the enterprise's key knowledge objects. A Six Sigma process may be used as the framework to provide process improvement to the knowledge-flow-to-value process and provides a foundation for continuously accelerating enterprise knowledge.

Many companies struggle to keep pace in a rapidly changing market. Increasingly, they look to intranets to help increase their rate of bringing innovations to market, reduce cost and improve their ability to "compete on knowledge." The use of intranets does not achieve the desired result. An assessment of businesses identifies five general problem areas:
eCommerce Strategy: Companies are making ALL information available on their internal and external web sites with a subsequent loss of productivity. People are deluged with volumes of information, only some of which provides value to their process.
Empowerment: This has become a euphemism for abandonment. Departments are allowed to select their own supporting information systems that result in redundant systems and information silos.
Audit: ROI, business justification, metrics are either absent or inconsistently applied.
Without metrics and measurement, it is impossible to accurately predict time, cost and resource requirements; nor are most managers held accountable for them.
Technology: Global networks are everywhere, but they do not support effective, efficient global access to corporate knowledge.
Competencies: Most Information Technology departments deploy technology before or without an understanding of the process it must support. With the installation of enterprise systems, technology dictates sub-optimal process change.

Resolving these challenges can be achieved by identifying how knowledge flows through a process to create value for the customer of the process. This knowledge must be captured in documents that are structured and authenticated for human comprehension. These documents are then used as milestones of a project that explicitly defines their creation which is, subsequently, instantiated and monitored with workflow that automatically generates performance statistics about "knowledge flow to customer value."

An enterprise possesses many different types of knowledge, both recorded and unrecorded. Knowledge includes cognition, skills, theories, rules, processes, techniques, instructions for action used by the enterprise to solve problems and to produce output, some of which has been recorded in documents and some of which is unrecorded form. A document may include any form of media used for recordation, whether paper, electronic, optical or using some other form of technology. Unrecorded knowledge in the form of skills and information retained in the minds of the enterprises members should be identified. Some of the most important knowledge is stored in the minds of enterprise employees members.

Knowledge is captured in a variety of ways. Experts collaborate to explicitly capture knowledge in documents based on their tacit knowledge and skills. Other knowledge is created and put into documents in a variety of ways that can be productively described by business cases. However, knowledge must also be catalogued (such as with key words) and stored in ways that can be found with sophisticated searches.

The knowledge that has broadest value is the information people need to operate processes that create value for the customer of the process. For example, the knowledge in engineering documents used to create a product adds value by meeting customer needs, which, hopefully, produces a profit. This knowledge is built into technology, work instruction documents and core competencies of people. Potential value is built into the development process, where people create new products and record their specific attributes in design documents for more new products down the road. The cost and rate at which value is added or created has a significant impact on an enterprise's wealth.

Noise can be thought of as an incomprehensible jumble of images and text. Data can be considered the results from monitoring events or is derived from other data. Information is the result of summarizing or correlating data. It is data organized into patterns. Knowledge is information which has meaning (and can be in both recorded and unrecorded form). It has been validated, often from documents or collections of documents, but not necessarily, based on criteria determined by the consumer and the industry, such as: quality of method ― analytical, statistical and logical methods used to build the information base; review by peer group to validate structure and content based on correspondence: the knowledge corresponds to something real; coherence: the knowledge coheres appropriately with other propositions; pragmatic: propositions that work.

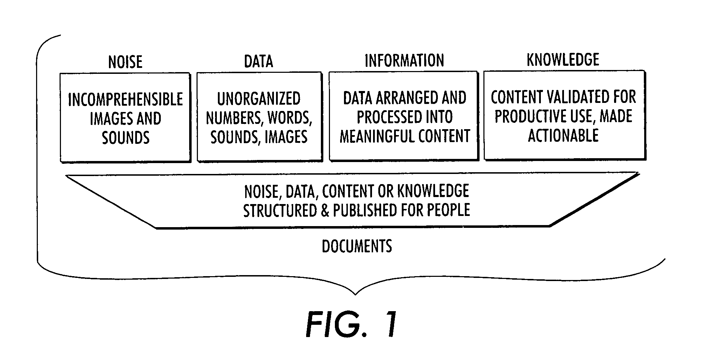

Figure 1 illustrates the relationship between noise and knowledge. Consider that unstructured volumes of information arbitrarily made available on an enterprise's intranet may be more noise than data. In this case, people who search for information may get less than one per cent precision and recall, just like the internet. Either they get hundreds of irrelevant documents (poor precision) or none (poor recall). Providing people with no data or volumes of data that they can't trust significantly inhibits productivity. Global intranets that deliver timely, accurate knowledge to explicitly defined processes are a key to enterprise performance.

Documents are an explicit form of enterprise communication and contain data, information and knowledge formatted for people. All explicit communication between people is a document: written, oral, electronic, paper, video, audio or physical prototype. This definition of documents subordinates them to data, information and knowledge. Repositories are "libraries" of documents, either physical or electronic. To be effective, they must be well-organized. Most often, this requires using meta-data and taxonomies for structure. At another level, irrelevant collections of documents may be more noise than knowledge.

Knowledge, Content and Document Management. Documents may contain aggregated data, information and knowledge. Documents are often made up of data, information and knowledge objects. For instance, a data object might be a set of numbers generated by a gauge and incorporated in a printout. An information object might be the set of characters that make up a street address. A document may be an email with attachments. These objects also contain content. Content management manages these objects and supports the dynamic reuse of an object in different documents, as in personalized web pages.

Analysis of document and content flow is a viable approach to analyzing an enterprise's knowledge, because documents represent a "sufficiently coarse grained but detailed enough" view of knowledge in enterprise to define the state of a business and its problems, and indicate a structure for the solution. Originally, each document is created by a person using a combination of insight, interpretation of old knowledge, analysis, synthesis and systems. Until knowledge is recorded in a document, it does not belong to the enterprise, but remains with the people who possess it. In an undocumented process, knowledge departs with that person. Put into documents, this knowledge can be archived, accessed, reused and reinterpreted long after the people who created it leave. Each value-added step in any enterprise process may be described in a document, changed through documentation or replicated with the enterprise using a document to initiate it. Documents may be used as the primary knowledge objects for analyzing knowledge flow to customer value. Modeling document flow can simultaneously consider processes, people and technology and how they contribute to the enterprise.

Knowledge Taxonomy based on Enterprise Knowledge Objects. A knowledge /document taxonomy makes knowledge shareable and accessible. A taxonomy is defined as "orderly classifications according to their presumed relationships" and should be independent of organization. For knowledge to be shareable and accessible, documents must be part of an enterprise knowledge architecture. Metadata (data about data, e.g., title, author, data, location, description) and keywords may be used to act as a corporate library card catalogue; this categorization can be derived from library science cataloguing techniques plus engineering or scientific disciplines associated with the company's industry. Precision and recall of search may be improved by explicitly defining and continuously improving this knowledge document taxonomy, including keywords.

A digital library is a managed collection of information, with associated services, where the information is stored in digital formats and accessible on a network with procedures to select the materials in the collections, to organize it, to make it available to users, and to archive it. They provide standards for cataloging, indexing and validating information. Digital libraries can be used to store the enterprise's documents which have been categorized according to the knowledge taxonomy.

A knowledge taxonomy for an enterprise may be initially broken down into five types of documents: knowledge, transaction, management, capability and external. Knowledge documents contain the specific knowledge that the enterprise uses to create unique value for its customers in the form of products and services. Transaction documents contain the knowledge that initiates processes and records the performance of the processes. Management documents contain the strategic direction and operational facts to direct a business process. Capability documents catalog and quantify enterprise capability and capacity - intelligence, process, people, systems, facilities and tacit knowledge. External documents contain information about the enterprise's market environment and are created and maintained outside of the enterprise. For example, a knowledge taxonomy for a manufacturing organization might be broken down into the five types of documents (Competitive, Transaction, Management, Capability and External) with the following subcategories:

### Competitive

Market: account history, competitors, product specs, proposal and quote, collaterals, price lists/catalogs.
Develop: ECR/ECO/ECN, Family of parts BOM, standard parts list, models-solid surface, FEM/FEA, product drawings, design BOM, detail drawings, detail BOM, assembly drawings.
Purchase: supplier history, catalog parts, prototype POs pilot contracts, production contracts, schedules.
Build: status, capability and capacity, time and cost to build, DFM/DFA redlines, fixture design, facility requirement, material requirement, facilities plan.
Support: maintenance manuals, installation manuals, service bulletins, parts catalogs, user guides, support schedules.

### Transaction

Request: Sales forecast, sales order, service order, purchase order, work order, tool order.
Require: document requirement, process steps, capability requirement, requested resources, delivery requirement(shipping, receiving, move tickets, packing lists, POs).
Schedule and Authorize: current schedule, over-utilized capacity, unavailable capability, back schedules, proposed schedules.
Approve: sign-off checks, test acceptance, certification, content verification, measurement.
Status of Operations: document history, process history, maintenance history, time cards, capability available, resource availability.
Failure Notification: erroneous documents, inadequate methods, bad product or service, warranty data.

### Management

Strategy: mission, process vision, enterprise metrics, allocations.
Change Requirements: change plan, capability requirement, project milestones, test criteria.
Measures (audit): process metrics, summary structures, sampling criteria, variation limits.
Operations (direct): goals, finance (contract, customer, budget, invoices, job costing reports, accounts receivable, accounts payable, payroll checks, rebate checks), directives, forecasts.
Policy: guidelines, HRM policy procedures, HRM documents, budgets, transaction structure, knowledge structures.

### Capability

Intelligence: sales/customer, method (patent), product (patent), market valuation, operations status.
Process: deliverables, function, education, job classes/skills.
Systems: communication, automation, computation.
Facilities: equipment, tools, physical plant.

### External

Stockholder Customer: status, capability and capacity, RFP/RFP, drawings and specifications.
Suppliers: status, capability and capacity, product drawings, design BOM, proposal and quotes.
Competitor: strategy, products, pricing, customers.
Economy: exchange rates, market indicators, global politics.
Government: regulations, standards.

Knowledge may be stored in documents which are categorized according to the knowledge/document taxonomy. Note that some knowledge (for example, strategy) may originally be in unrecorded form and must be recorded before it can be categorized.

For explicit knowledge to be shareable and accessible, documents must be part of an enterprise knowledge architecture. Documents are repositories of enterprise knowledge that can be used to support people in operating and improving processes. When an enterprise knows how its documents flow through and affect its processes, it can determine how to accelerate the enterprise for faster response to its marketplace.

Consulting Dimensions. To assure a successful transformation of a knowledge environment, all dimensions should be considered. Culture makes information meaningful, in terms of interpreting people's experience and helping them decide how to act. It is in this sense that knowledge is called actionable information. Content management is focused on managing, retrieving and presenting information to invoke desirable behaviors in the information consumer (e.g., filling out a paper or online form quickly and accurately). Process represents the tasks that people perform to create value for the customer of the process. It must be defined in a way that permits monitoring and measurement of knowledge flow to value. Technology architectures ensure knowledge is optimally accessible, managed and archived and are key to building environments that improve a corporation's ability to compete on its knowledge. Infrastructure using global information networks, collaboration technologies and the web is deployed to support business requirements and ensures that flow of knowledge to value.

Culture Dimension. Knowledge is related to culture because culture assigns meaning to information, transforming it into knowledge. Culture is the source of the context, relevance, authenticity, and experience that elevate information into knowledge. Culture makes information meaningful, in terms of interpreting people's experience and helping them decide how to act. It is in this sense that knowledge is called actionable information. Knowledge management recognizes of the close relationship between knowledge and culture. Anthropology, Sociology, Cognitive Neurology, Organizational Psychology, Ethnography are useful in analyzing knowledge and culture. The cultural dimensions involves:
Knowledge categories: share features of meaning and knowledge rules, declared or implied, that usually control behavior or stimulate activity, which is tacitly approved or openly promoted by society.
Ethnography: a family of techniques through which anthropologists investigate cultures; it is used to interpret aspects of a culture (corporate or otherwise): How people are grouped or categorized; The general behavior of groups (sharing, political, hostile); How groups communicate; Barriers between groups (e.g., distance, language, attitudes, etc.); A group's dependence on external information.
Communities of Practice: "peers in the execution of 'real work'. What holds them together is a common sense of purpose and a real need to know what each other knows. Most people belong to more than one of many practices within a single organization."
Quality criteria: distinguishes "good" knowledge from "bad" knowledge.
Physical environment: Distance among workers and their tools, office arrangements, physical barriers, geographic dispersion, and similar considerations.
Content Dimension. Content design is focused on presenting information to invoke desirable behaviors in the information consumer (e.g., filling out a paper or online form quickly and accurately). Many of the tools used in cultural assessment for collecting information can be used here, but an understanding of alternative presentation methods from the architectural dimension is also required here to project a future state. The disciplines and terminology associated with this dimension include: Understanding the events associated with the need to receive knowledge through a document interface; Understanding the importance of conceptualizing business activities as the product of knowledge flows through document interfaces; Analyzing the current and desired behaviors associated with communicating knowledge through various document interfaces (i.e., hard copy documents, Internet, Intranet, voice mail, multi-media training, etc.); Engineering document interfaces to solve current business problems with an aim to maximize the accuracy and efficiency of future business directions and capitalize on existing corporate talent, opportunities, leading edge document centric process, and technologies.
Process Dimension. The process dimension represents the tasks that people perform to create value for the customer of the process. Once knowledge and content objects that deliver value are clearly identified, it is possible to define the process in a way that permits monitoring and measurement of knowledge flow to value. The process dimension is used to establish the economic value added or return on equity in a knowledge environment by monitoring and measuring the rate at which knowledge and innovation flow to customer defined value and its accelerated rate as a result of the recommended changes. Most of the tools and techniques that are used in this space are robust and have been well established by process engineering and Six Sigma in manufacturing. The tools used include process and simulation modelers, with business process management using web services. However, a difference in applying the process dimension is the focus on people interactions and behaviors as a key mechanism in operating and improving process, creating a high degree of interaction with the cultural dimension.
Architecture Dimension. The support of knowledge in corporation is heavily dependent on the principles of library and information science, supported by web technologies. Building technology architectures that ensure knowledge is optimally accessible, managed and archived are key to building knowledge environments that improve a corporation's ability to compete on its knowledge. The effective integration and global deployment of Content Management, Portal, Content/Document Management, Workflow and other key COTS software are the components of an over all Knowledge Technology Architecture Strategy. The architectural dimension is defined in the context of the Knowledge and Content Lifecycle.
Infrastructure Dimension. The infrastructure dimension is concerned with ensuring that the corporate infrastructure will support the flow of knowledge to value whatever the media. This includes determine the required hardware technology. This includes document, information and data capture, indexing, repository management and distribution as hardcopy or electronic information on a variety of media. It includes the facilities and physical placement of technology and people.

The method of managing knowledge can be implemented for a particular enterprise by defining a structure by which knowledge is communicated; optimizing the flow of information throughout the enterprise; establishing a framework of information technology to support the rapid distribution of information; gathering and recording data on business performance; and providing information to employees responsible for changing the business. When global document management and workflow is fully operational, the resources and technology available to the enterprise can smoothly accelerate the output of product and services.

The method may further include identifying critical knowledge to deliver value, structuring comprehensible document templates and defining an enterprise knowledge taxonomy; modeling core processes to identify synergies, defining processes as projects with document milestones, and instantiating and monitoring projects with workflow; defining and understanding management as a process (lead, improve, direct, enable, audit), installing metrics to audit performance, and identifying and training for core competencies; installing and using document management to provide exceptional access to knowledge; installing and using project management and workflow software to explicitly define and monitor knowledge flow to customer value; and using document and workflow transaction statistics to optimally "Operate" and "Diagnose" knowledge taxonomy and flow; using business cases to optimally "Develop" and "Deploy" enabling technology.

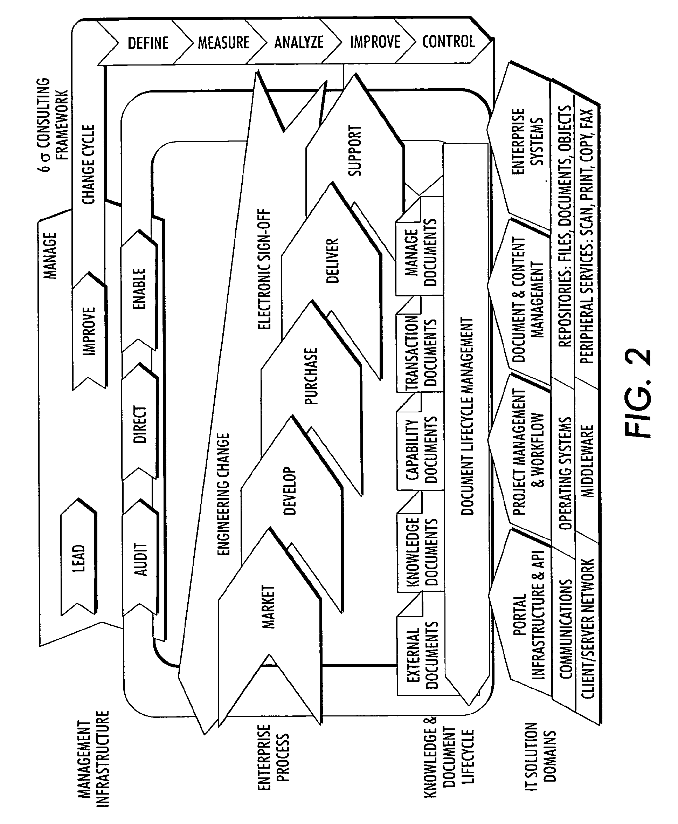

Figure 2 illustrates relevant documents and high level processes in an enterprise. Figure 2 also illustrates the interaction between knowledge, process, people, systems and change. In all of these areas there are documents. If the full impact of document technology is to be assured within an enterprise, its documents should be stored and authenticated within the context of a well-defined architecture for knowledge.

People, who are educated to manage and change processes with facts from systems that summarize transaction documents, are able to: lead by effectively allocating resources based on facts; improve by changing processes, products and services in response to markets; direct by profitably producing products and services with processes that are fine-tuned to resolve bottlenecks through evaluating status and performance documents; audit by assessing variation of processes, products and services through real time monitoring of the velocity and content of all value added documents; enable by supporting core processes with document systems that automate and accelerate document flow.

To perform their work in today's business environment, people need to manage themselves. In this sense, the terms employees, managers, workgroups and teams are synonymous. The elements of management: lead, improve, direct, enable and audit, are parts of every job description. For the entire enterprise to succeed, however, there must be a framework of meaningful metrics against which performance can be measured. As the role of direct supervision diminishes, the importance of metrics, monitoring, measurement, and business process statistics increases. The ability to easily sift and summarize business transactions in a variety of views, including raw data, becomes critical to effective, efficient and viable management.

Deming introduced the idea that knowledge of process variation was fundamental to continuous process improvement. These variations are defined statistically in terms of standard deviations from the mean (represented by the Greek letter, sigma) of a normal distribution (bell curve). Six Sigma is six standard deviations from the mean or 3.4 defects or errors (or whatever the bell curve represents) per million.

Six Sigma can be used as a framework to improve the knowledge flow to value process for continuously accelerating enterprise knowledge. Six Sigma consists of five majors tasks: Define, Measure, Analyze, Improve and Control. The Define task requires that a high-level process model be developed of the candidate process for improvement. Since the process being considered is no less than the enterprise, the enterprise process view will be used as the foundation for Six Sigma knowledge continuous process improvement. A purpose of an enterprise level Six Sigma knowledge consulting process is to increase the economic value added of the enterprise.

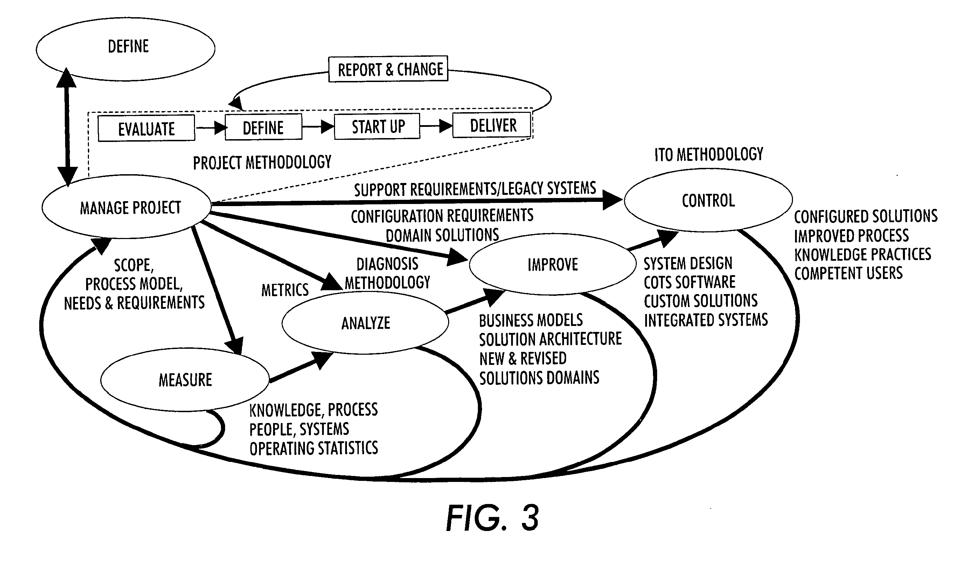

Figure 3 illustrates the components of a Six Sigma process applied to a particular problem, such as the management of knowledge in an enterprise. The first step is to Define the project's purpose and scope. A clear statement of the intended improvement is created, as well as a high level process map and list of what is important to the enterprise. The second step is to Measure the current state. Baseline data is generated on the enterprise's current process performance. Data that pinpoints problem location or occurrence is identified. A more focused problem statement may be defined. The next step is to Analyze (diagnose) to identify root causes and confirm them with data. The fourth step is to Improve: to try out and implement solutions that address root causes. The last step is to Control to evaluate the solutions and plan, to maintain gains by standardizing the process and to outline steps for on-going improvements including opportunities for replication. The output of the Six Sigma process is a before and after analysis; a monitoring system and documentation of results, learnings and recommendations. During the Six Sigma process, it may be decided to introduce new technology in order to make processes more effective and efficient but also to provide tools to better manage processes and guide change.

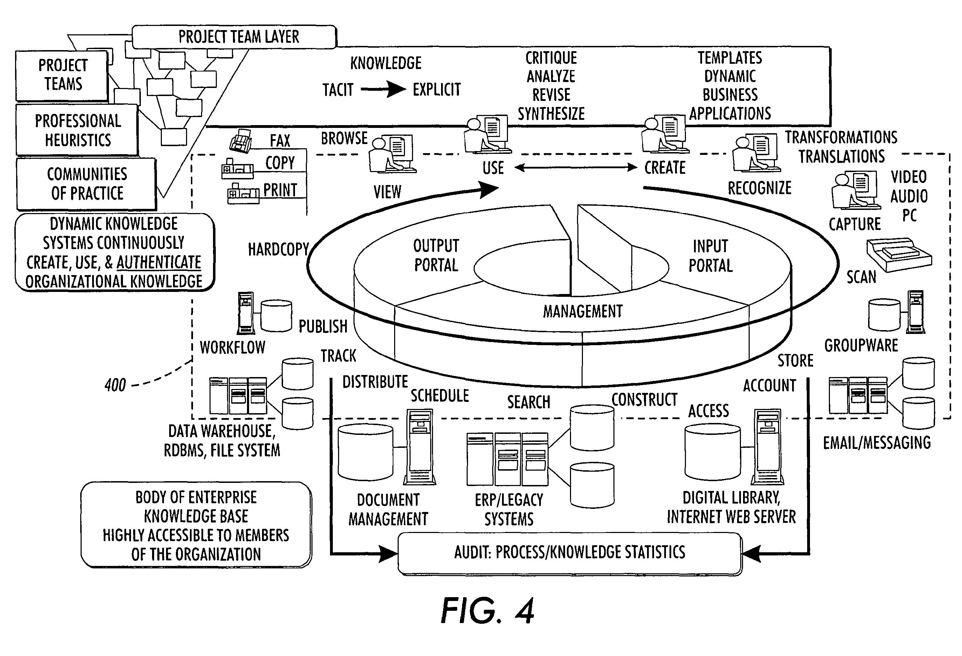

CONTROL: Document Architecture. The knowledge embedded in accessible documents is the enterprise knowledge on which companies operate their business and the basis from which they build and grow. Document Lifecycle Management illustrated in Figure 4 requires a corporate wide strategy and architecture for document services. As the work process move from engineering to development and testing to manufacturing and to support, for example, it is desirable that the accumulated knowledge is kept and used. The maximum benefit may be achieved if this corporate wide perspective and standards are adhered to and the perspective of overall work processes, not organizational silos' is maintained.

The document lifecycle sets the context of a document architecture; it provides a structural model that sets the context for development of business support infrastructure services. This architecture defines a set of components ("services") that cooperatively provide functionality required by the users, while enabling the sharing and reuse of technology, infrastructure, and application software. These services may be provided, for example, through partnerships and alliances among various internal service organizations. Examples of component services are set forth in Table 1.

| | |
|---|---|
| Create | Templates are created with officeware to define document structures that are completed manually or dynamically later. Dynamic Documents are created directly from application software, from templates and officeware. |
| Recognize | Transformation converts information in one format to another. Translation changes the document from its native language to the user's language. |
| Capture | Acquires information from a portion of published electronic media such as clipping a PC screen, web page, text, video or audio. |
| Scan | Transfers physical media such as paper, photographs, microfilm and microfiche into an electronic format. |
| Store | Checks in a document identified by metadata fields into one or more document repositories. Metadata identifies critical document attributes. |
| Account | Monitors and tracks who, when, uses (view, write, redline), version, location, unauthorized access attempts, and duration of transactions. |
| Access | Checks out a document and/or its metadata from a document repository with view, redline or write, and user, revision and restrictions. |
| Construct Construct | Identifies links of a dynamic and static compound document so the links can be managed by a document management system. |
| Search | Identifies a list of documents that contain metadata and/or information that satisfies the conditions of a complex query. |
| Schedule | Schedules required work based on its knowledge of resources that is stored in transaction documents created from tracking process steps. |
| Distribute | Provides the ability to notify individuals and transmit critical documents to them in two ways: Push distribution sends documents to a specified audience. Pull distribution puts documents where they can be viewed by a specified audience. |
| Track | Checks the document status and records statistics that support metrics of time, cost, and resource utilization for scheduled processes. |
| Publish | Instantiates the templates and scripts as defined in *construct* to prepare documents for distribution. |
| Hardcopy | Print, Copy, Fax. |
| View | Displays a document on a PC or video screen for use by its viewer. Viewing documents is ubiquitous in every business. |
| Use | Critique creates redlines and annotations. Analyze creates a new document from studying the contents of the document (i.e., graph). Revise changes an existing released document, resulting in a new version of the document. Synthesize creates a higher level compound document composed of other released documents, new documents and scripts. |

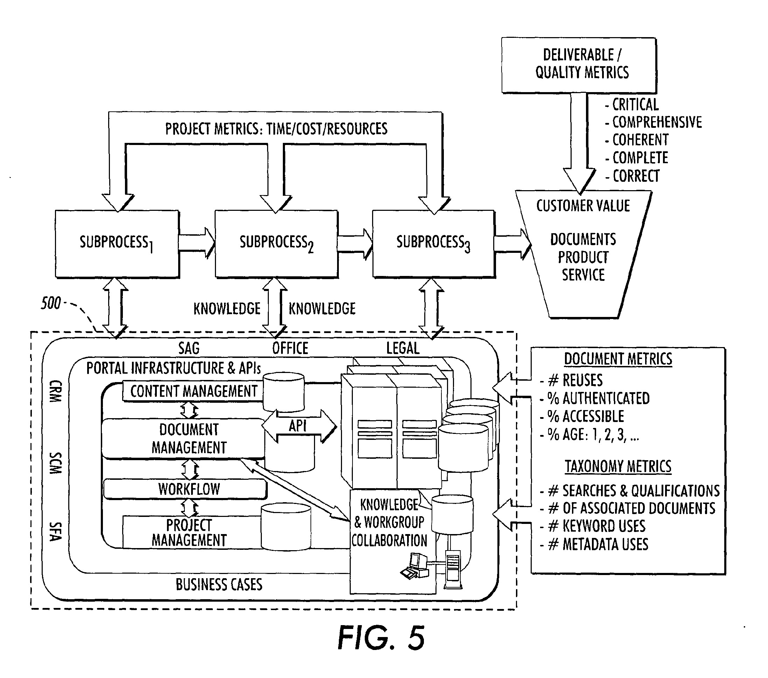

IMPROVE/Develop: Solution Domains and Business Case Stages. Technology solution domains must define a rational order of technology selection and deployment to explicit define and monitor the development, deployment and operating environments. It must be understood at all levels of the organization that enterprise knowledge and process variation are the fundamental elements of enterprise productivity and the impact that will have on specific tasks. For example, IT Solution Domains introduced in Figure 5 include: Portal aligns information resources with the organizations business objectives by personalizing, profiling, and presenting its information, business, applications and inter-organizational interfaces in the context of roles and work processes. Knowledge and Workgroup Collaboration provides the ability to create a forum where teams of people can share resources and information and work together on a worldwide basis; it enables a collaborative environment required for both structured and unstructured business processes. Project management is the application of knowledge skills tools and techniques to project activities in order to meet or exceed stakeholder needs and expectations from a project; a project is a temporary endeavor undertaken to create a unique product or service. Workflow enables external and internal users to automate and drive critical business activities and authenticate process deliverables. Content Management manages dynamic documents throughout their lifecycle; collaborative creation, secure delivery, revision, online publishing, and re-use. Document Management provides a secure repository for multiple versions and markups of compound and dynamic documents in multiple file formats and supports check-in with administrative sign-offs, check-out to authorized updaters, reviewers and viewers and monitors and reports on all document transactions.

Change scenarios in the Development Methodology are defined by IT Solution Domains, flow to value metrics and businesses cases to facilitate understanding of core business processes and the impact of document technology. Businesses cases that have been considered so far are illustrated in Figure 5.

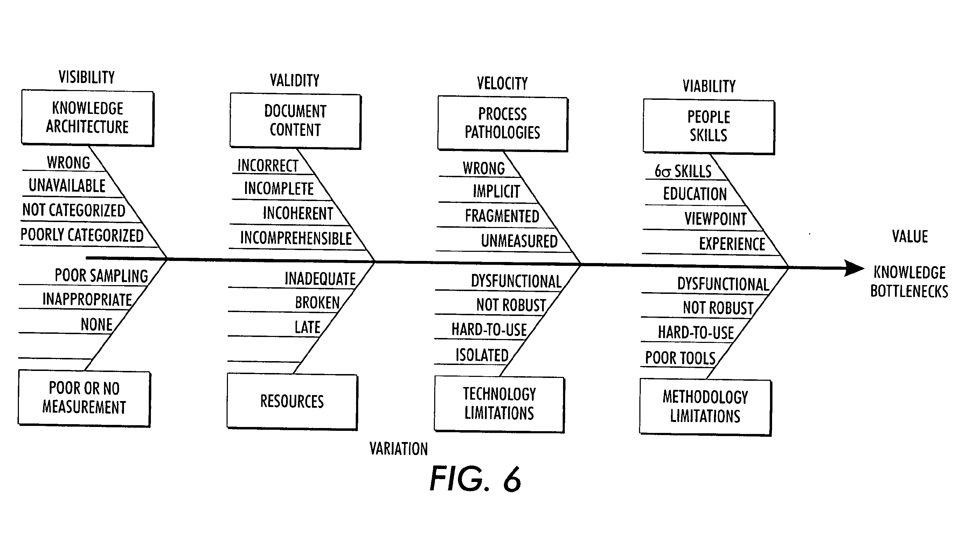

A Business Case outlines specific ways in which knowledge/document management projects could impact business processes. A business case project was defined to align with the ANSI standard Project Scope processes for project management. The goal is not to provide a complete inventory of possible projects, but rather to discuss enough to convey the basic idea. All business cases assume that much of the knowledge to deliver value is or will be captured in documents, the process of productively using knowledge is explicitly defined within a project. The project is instantiated and monitored with workflow to provide knowledge-oriented as well as cost, time and quality performance statistics illustrated in Figure 6. These Flow-to-Value statistics will be captured as part of each business case project, but they must also be captured as part of the business environment that is created as the result of the projects. The purpose of capturing knowledge and document transactions metrics is to build an understanding of how better knowledge impacts business processes and can be used to improve them.

The progression of a business case is shown in Table 2:

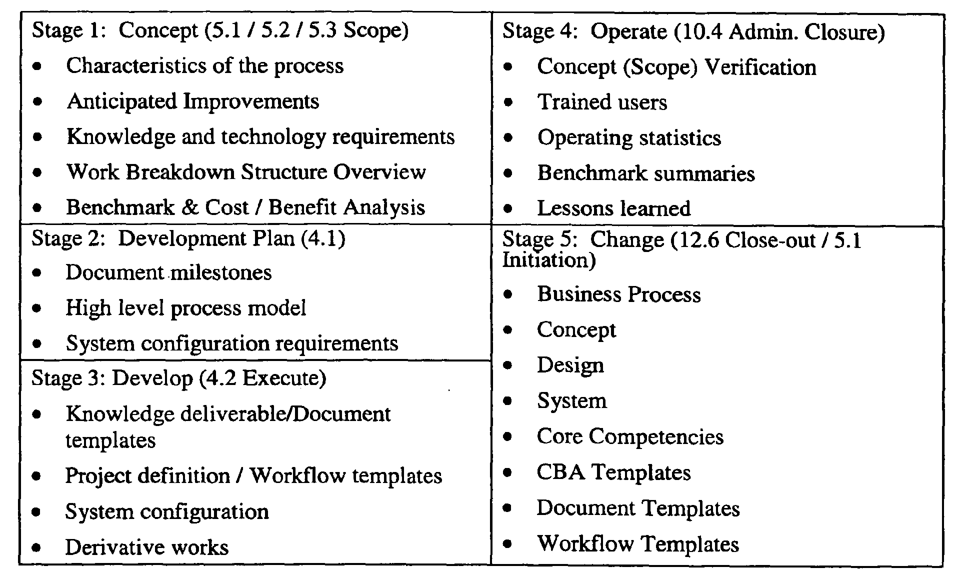

IMPROVE/Deploy: Cost Benefit Analysis Templates. Capturing DMS Benefits. A DMS provides tools to manage people and guide change and can increase revenue and/or reduce cost depending on the system and business environment in which it is deployed. To justify a DMS' initial deployment, a general business case and cost/benefit analysis is provided. Additional and more significant local benefits accrue by developing and deploying more comprehensive document management and workflow solutions. A DMS benefits table is set forth in Table 3:

| Time Benefit Savings | Year 0 | Year 1 | Year 2 |
|---|---|---|---|
| (a) % of time spent handling documents | | | |
| (b) % of time spend with a DMS | | | |
| (c) % of time spent creating existing documents | | | |
| (d) % of time spent with a DMS | | | |
| (e) % of time correcting document errors | | | |
| (f) % of time spent with a DMS | | | |
| W % of time save per user (a-b+c-d+e-f) | | | |
| X % of documents in the system | | | |
| Y Total Users | | | |
| Z Average burdened cost per user | | | |
| Cost savings (benefit) = W*X*Y*Z | | | |
| Other benefits: | | | |
| paper cost savings | | | |
| copier equipment maintenance cost avoidance | | | |
| telephone cost savings | | | |
| postage cost savings | | | |
| floor space for file cabinets and equipment | | | |
| Total Hard Benefits (time + other) | | | |

Table 3 is developed from time spent searching for documents, recreating existing documents, and correcting errors in documents. Its major fallacy is that it is dependent on people's opinion not from careful monitoring of business process.

DMS Soft Benefits. Once a DMS is deployed, immediate value will be derived from the capture of process metrics. Additional soft benefits will accrue as a result of the deployment. These benefits will vary significantly depending upon the business environment. These soft benefits should be quantified to give further credibility to the need for a globally deployed document management system.

| Benefit | Example Metric |
|---|---|
| Improved total solutions and services | Fewer complaints |
| Strengthen customer relations | Faster response to inquiries |
| Stimulate innovation | Less time spent on administrative |
| Develop the internal culture / competence | Record performance statistics |
| Better management Information | Variation of process known |
| Improved quality assurance & control | Fewer customer service request |
| Better customer service | Fewer late deliveries |
| Improved employee satisfaction | Fewer sick days |

ANALYZE. To facilitate an understanding of the problems in the business environment a Cause and Effect (or Fishbone) diagram like one shown in Figure 6 may be used. When the problems causing the bottlenecks are understood a variety of analysis methodologies may be employed. To initiate analysis, document flow that records the creation and distribution of enterprise knowledge must be defined. It defines and uses a high-level core process model, but in more detail and unique to the organization to communicate and identify major bottlenecks. It is also appropriate to initiate a time-based simulation. However, ongoing long-term dynamic analysis presumes that time-stamped documents are or will be available to determine the rate of flow. This won't be available until a project view of process with documents as milestones is adopted and supported by the document and workflow technology described earlier.

The method for analysis information include: Use process models to specify critical document links within and between processes; Explicitly define processes as projects with document milestones using a project management software; Monitor critical document velocity and compute variance from process histories; Document ill-structured processes, linkages and bottlenecks associated with document flow, document formats or natural language. In addition, some customer employees should be trained in modeling and Six Sigma processes so that the technique becomes part of the organizational infrastructure.

Initially an "almost AS IS" view of the organization is developed to determine what improvements and innovations can be accomplished immediately. This initial implementation will provide the information systems tools to support the Document Lifecycle. This includes defining requirements for the document and workflow technology that must be installed to reduce bottlenecks in business processes.

When the process / document environment is being modeled, it is important to identify the critical documents and bottlenecks as they become evident. After they are installed, a document manager and workflow begin supplying information to simulate existing processes. "What if" analysis of the existing processes can supply critical information for deployment.

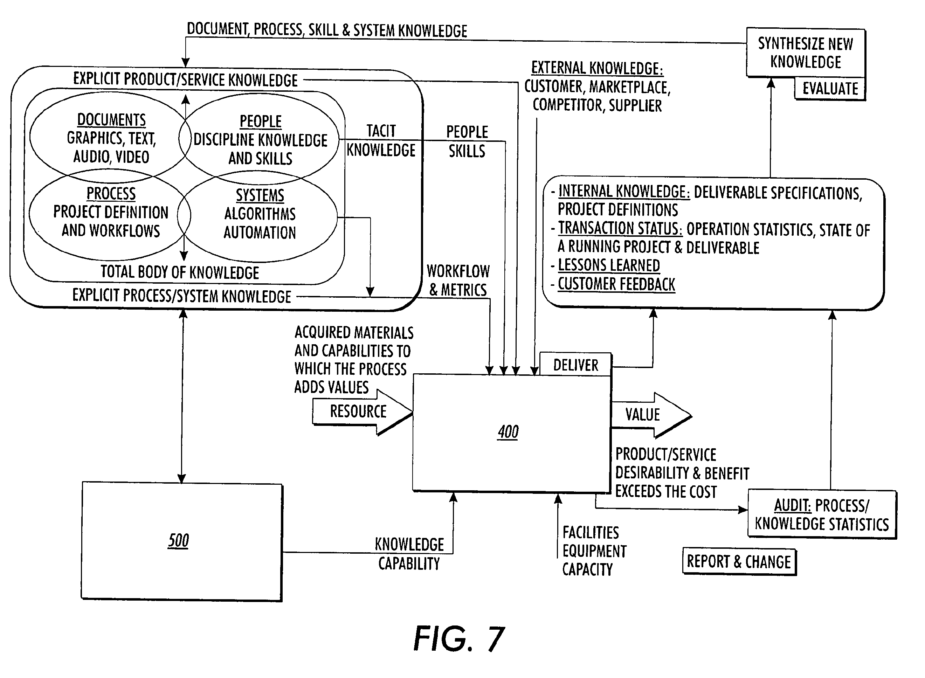

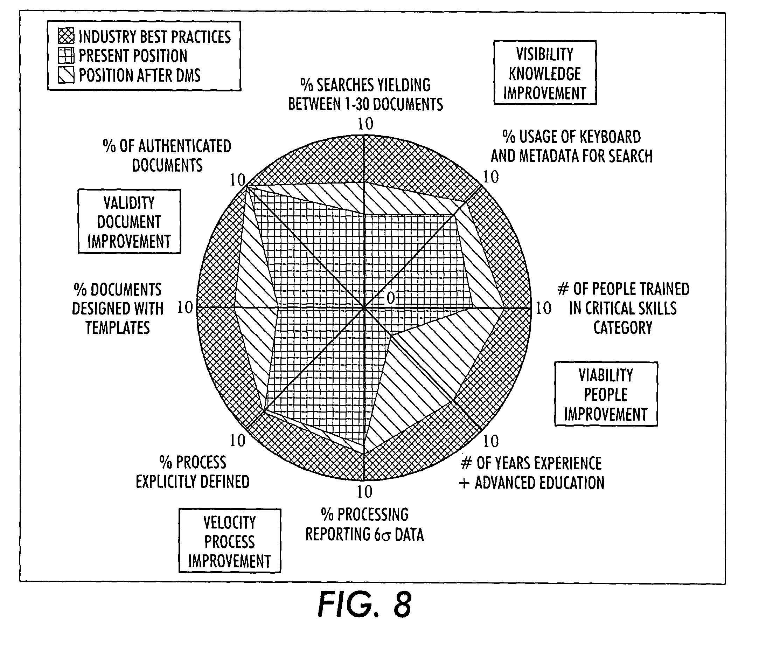

MEASURE: Business Environment. Figure 7 illustrates knowledge being used by a process in the Control Phase of Figure 5 to create value that is supported by Document Lifecycle Management (Figure 7) and IT Solution Domains (Figure 8). Notice that when the knowledge use and creation are supported appropriately, Document Management and Workflow automatically capture the statistics in Table 3.

The knowledge management questions that should be continuously asked and answered are: Is there a process by which unknown knowledge and knowledge in people's heads to optimize the business becomes explicitly defined in processes, documents and systems? Is the process being measured in a way that tells how to improve it and its knowledge support capabilities? Is knowledge in the bubbles contradictory (e.g., Do people perform tasks as defined). Do people trust the knowledge in the bubbles; how do they go about trusting it?

Failure Mode and Affects Analysis (FMEA). FMEA is tool to help identify and clarify the what measure and how to collect data on those input and output process documents that are critical to the current process. To construct an FMEA: Identify the potential failure modes; Identify the potential effect of each failure and rate its severity; Identify the causes and likelihood of occurrence; Rate the ability to detect each failure mode; Determine the Risk Priority Number (RPN) by multiplying these numbers together; Identify ways (and analytical methods) to reduce or eliminate risk associated with high RPNs.

**Table 4**

| illustrates an FMEA for knowledge and documents. | | | |
|---|---|---|---|
| Potential Failure Mode | Severity of failure | Occurrence of failure | Detection of failure |
| Incorrect | 10] Stop operations | 10] More than 1 per hour | 10] Defect is not detectable |
| Incomplete | 9] Be Illegal | 9] More than 2 per day | 9] Occasional objects validated |
| Incomprehensible | 8] Be unfit for use | 8] More than 1 per day | 8] Objects systematically validated |
| Incoherent | 7] Extreme cust. dissatisfaction | 7] More than 2 per week | 7] All objects validated |
| Untimely | 6] Result in partial malfunction | 6] More than 1 per week | 6] Validated and formally analyzed |
| Unavailable to reuse | 5] Cause major perf. loss | 5] More than 1 per mo. | 5] Process is monitored & validated |
| Uncategorized for search | 4] Cause minor perf. loss | 4] Once per quarter | 4] Immediate reaction to task overruns |
| Limited availability | 3] Cause minor nuisance | 3] Once per 2 quarters | 3] 100% validations of objects & process |
| Limited comprehensibility | 2] Be unnoticed; minor effect | 2] Once per year | 2] All objects automatically analyzed |
| Not reused | 1] Be unnoticed; no effect | 1] Once per 3 years | 1] Defect obvious & kept from customer |
| RPN = Severity x Occurrence x Detection; after recommended action, re-compute RPN | | | |

Best Practice Metrics. Figure 8 represents best practice along the eight spokes where the outside circle is a best practice 10 and 0 is no practice. The inner most figure represents the current state of the business process and the surrounding figure inside the circle identifies what was achieved with the installation of technology and subsequent process improvements.

The spokes of wheel were derived from the Critical-to-Quality tree categories in the introduction of this report for visibility, validity, velocity and viability of knowledge. After deployment and training in the use of these systems, further improvements can be attained utilizing Six Sigma improvement and knowledge sharing and management methods.

CONTROL: Total Quality Knowledge Management. The Diagnosis Methodology creates an environment where knowledge is continuously captured in continuously redesigned document templates. These templates are milestones of continuously redefined projects that explicitly define the process of flow to value. These projects are instantiated and monitored with workflow to generate value faster and continuously improve everything. TQKM simultaneously considers knowledge, process, people, systems, and change.

Method for Knowledge in Documents. Identify critical knowledge as document objects that deliver value to the customer. Define an enterprise knowledge classification system of subject categories with descriptive, structural and administrative metadata and keywords to assure accessibility. Organize corporate knowledge libraries using the classification system. Create and maintain a union catalog of all corporate libraries. Structure document templates for comprehensibility to capture critical knowledge content. Monitor document reuse, age, keyword and metadata usage, and authentication.

Method for Process with Document Milestones. Model core processes to identify critical document links and synergies. Define a project view of process with document milestones used to deliver customer value. Instantiate the project with workflow and monitor knowledge flow to value. Abstract, index and catalog documents and knowledge that are critical to the process.

Method for People Interact through Documents. Define and understand management as a process -- lead, improve, direct and enable. Install metrics to audit and benchmark process and corporate library performance. Summarize workflow and document usage statistics to manage all resources. Monitor people's process performance and related core competencies. Teach project management, document construction and authoring, library science and TQKM.

Method for Systems Support for Documents. Provide an enterprise wide information technology system to: Construct, manage, publish and use document objects and structures, Search, access, catalog, index and abstract corporate knowledge, Explicitly define, operate, monitor, and report on processes and document transactions.

Method for Change to Accelerate Knowledge Flow. Analyze the effectiveness of classifications for knowledge search. Analyze the variation of process cost and velocity of knowledge to guide change. Continuously improve knowledge classification, document templates, processes, skills, and systems to eliminate bottlenecks, accelerate flow, improve access, and increase authenticity of knowledge. Assemble integrated systems from commercial technology.'

## Claims

1. A method for managing knowledge within an enterprise, comprising:
defining a body of knowledge for the enterprise comprising skills, theories, rules, processes, techniques, instructions for action used by the enterprise to solve problems and to produce output, some of which has been recorded in documents and some of which is unrecorded form;
analyzing the body of knowledge to identify a plurality of knowledge objects, wherein a knowledge object comprises specific knowledge contained within the body of knowledge which is used by an enterprise process to produce an output having value to the enterprise;
defining a measurable business environment comprising a plurality of measurable enterprise processes, wherein the plurality of enterprise processes use the plurality of knowledge objects to produce the outputs having value to the enterprise;
measuring the flow of each knowledge object through its associated measurable enterprise process to produce the associated output to determine a baseline flow for the knowledge object;
modifying the enterprise process and measuring the flow of the knowledge object through the modified enterprise process until an optimized flow for the knowledge object has been achieved;
capturing any unrecorded knowledge objects and recording them in documents;
defining a knowledge taxonomy for the enterprise comprising a classification system for classifying the plurality of knowledge objects for the enterprise; and
classifying the body of recorded knowledge objects according to the knowledge taxonomy for the enterprise.

2. The method of claim 1, further comprising:
periodically re-defining the body of knowledge for the enterprise to include new skills, theories, rules, processes, techniques, instructions for action used by the enterprise to solve problems and to produce output, some of which has been recorded in documents and some of which is unrecorded form and to remove those skills, theories, rules, processes, techniques, instructions for action which are no longer used by the enterprise to solve problems and to produce output; and
periodically re-analyzing the body of knowledge to identify additional knowledge objects contained within the body of knowledge to be included in the plurality of knowledge objects and to remove no longer needed knowledge objects from the plurality of knowledge objects.

3. The method of claim 1, wherein defming a body of knowledge comprises:
collecting data pertaining to skills, theories, rules, processes, techniques, instructions for action used by the enterprise to solve problems and to produce output;
transforming the collected data into information comprising summaries and correlations of data; and
validating the information using analytical, statistical and logical methods or by peer group review to produce knowledge.

4. The method of claim 3, wherein analyzing the body of knowledge to identify a plurality of knowledge objects comprises:
identifying a plurality of enterprise processes, wherein an enterprise process uses knowledge to produce an output having value to the enterprise; and
analyzing the body of knowledge to identify which knowledge are used by the enterprise process to produce an output having value to the enterprise.

5. The method of claim 1, wherein the knowledge taxonomy initially classifies documents according to competitive documents, transactional documents, management documents, capability documents and external documents.

6. The method of claim 1, further comprising
capturing any unrecorded knowledge and recording them in documents; and
classifying the body of recorded knowledge according to the knowledge taxonomy for the enterprise.

7. The method of claim 1, wherein modifying the enterprise process and measuring the flow of the knowledge object through the modified enterprise comprises using a Six Sigma framework.
